(19) Europäisches Patentamt
European Patent Office
Office européen des brevets

(11) EP 0 683 797 B1

(12) EUROPÄISCHE PATENTSCHRIFT

(45) Veröffentlichungstag und Bekanntmachung des Hinweises auf die Patenterteilung:
**14.04.1999 Patentblatt 1999/15**

(21) Anmeldenummer: **94905734.3**

(22) Anmeldetag: **31.01.1994**

(51) Int Cl.[6]: **C08F 232/08**, G02B 1/04

(86) Internationale Anmeldenummer:
**PCT/EP94/00263**

(87) Internationale Veröffentlichungsnummer:
**WO 94/18251 (18.08.1994 Gazette 1994/19)**

# (54) VERFAHREN ZUR HERSTELLUNG VON CYCLOOLEFINCOPOLYMEREN MIT NIEDRIGER SCHMELZEVISKOSITÄT UND NIEDRIGER OPTISCHER DÄMPFUNG

PROCESS FOR PRODUCING CYCLO-OLEFIN COPOLYMERS WITH LOW MELT VISCOSITY AND LOW OPTICAL ATTENUATION

PROCEDE POUR FABRIQUER DES COPOLYMERES CYCLO-OLEFINIQUES A FAIBLE VISCOSITE A L'ETAT FONDU ET A FAIBLE ATTENUATION OPTIQUE

(84) Benannte Vertragsstaaten:
**DE ES FR GB IT NL**

(30) Priorität: **12.02.1993 DE 4304291**

(43) Veröffentlichungstag der Anmeldung:
**29.11.1995 Patentblatt 1995/48**

(73) Patentinhaber: **Ticona GmbH**
**65451 Kelsterbach (DE)**

(72) Erfinder:
- **BREKNER, Michael-Joachim**
  **D-60529 Frankfurt am Main (DE)**
- **DECKERS, Hellmuth**
  **D-55218 Ingelheim (DE)**
- **OSAN, Frank**
  **D-65779 Kelkheim (DE)**

(56) Entgegenhaltungen:

| | |
|---|---|
| **EP-A- 0 407 870** | **EP-A- 0 485 893** |
| **EP-A- 0 501 370** | **EP-A- 0 503 422** |
| **EP-A- 0 683 798** | **DE-A- 4 104 392** |
| **NN-A- 683 798** | |

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 683 797 B1

## Beschreibung

Die Erfindung betrifft ein Verfahren zur Herstellung von thermoplastischen Cycloolefincopolymeren (COC), die eine niedrige Schmelzeviskosität und eine niedrige optische Dämpfung aufweisen.

Lichtwellenleiter werden zum Transport von Licht, z. B. zum Zweck der Beleuchtung oder der Signalübertragung, eingesetzt. Sie bestehen im allgemeinen aus einem zylindrischen, lichtführenden Kern, der von einer Mantelschicht aus einem ebenfalls transparenten Material mit einer geringeren Brechzahl umgeben ist. Flächige Lichtwellenleiter bestehen z. B. aus drei transparenten Schichten, wobei die beiden äußeren Schichten eine geringere Brechzahl als die Mittelschicht aufweisen. Die Leitung des Lichts erfolgt durch Totalreflexion an der Grenzfläche. Als transparente Materialien lassen sich Gläser oder (organische oder anorganische) Polymere einsetzen.

Das für den Einsatz als Lichtwellenleiter verbreitetste Polymer, Polymethylmethacrylat (PMMA), ist auf Grund seiner niedrigen Glastemperatur von ca. 106° C nur bis ca. 85° C einsetzbar. Andere bekannte transparente Thermoplaste mit höherer Glastemperatur, wie z. B. Polycarbonat oder aromatische Polyester, weisen aromatische Baugruppen im Molekül auf. Diese führen zu einer erhöhten Lichtabsorption im kurzwelligen Spektralbereich. Der Einsatz solcher Polymerer für Lichtwellenleiter ist beispielhaft beschrieben in A. Tanaka et al., SPIE Vol. 840 (1987).

Durch Reaktionen an Polymethacrylaten läßt sich die Wärmeformbeständigkeit verbessern. Beispielhaft sei die polymeranaloge Umsetzung von Polymethylmethacrylat zu Polymethacrylimid genannt. Auch die Copolymerisation von Poly(meth)acrylat mit Comonomeren wie Methacrylsäureanhydrid oder Methacrylnitril führt zu Polymeren mit höherer Wärmebeständigkeit gegenüber dem unmodifizierten PMMA. Ein anderer Weg zu transparenten Polymeren mit erhöhter Glastemperatur ist die Verwendung von (Meth)acrylsäureestern (per)halogenierter oder polycyclischer aliphatischer Alkohole oder von substituierten Phenolen. Letztere weisen aufgrund der aromatischen Bausteine ebenfalls eine erhöhte Lichtabsorption im kurzwelligen Spektralbereich auf. Die ersteren Verbindungen ergeben zwar transparente Polymere mit hohen Glastemperaturen, jedoch ist die Verarbeitbarkeit z. B. zu Lichtleitfasern aufgrund ihrer inhärenten Sprödigkeit schwierig oder unmöglich.

Alle beschriebenen Substanzklassen sind wegen ihrer polaren Natur hygroskopisch. Bei höherer Temperatur während der Verarbeitung kann es durch den Wassergehalt im Polymeren zu unerwünschten Abbaureaktionen kommen. Der praktische Gebrauchswert wird dadurch gemindert.

Eine geringere Wasseraufnahme zeigen jedoch thermoplastische COC, die darüber hinaus eine erhöhte Wärmeformbeständigkeit aufweisen. Die vollständige Abwesenheit von Chromophoren, wie Doppelbindungen jeglicher Art, läßt diese Polymeren besonders für optische Anwendungen geeignet erscheinen. Auch im Bereich der Lichtleitung sollten diese Kunststoffe einsetzbar sein (EP-A0-355 682, EP-A0-485 893).
COC können unter Verwendung spezieller Ziegler-Katalysatoren (EP-A0-355 682) hergstellt werden, wobei üblicherweise Aluminiumalkyle bzw. Aluminiumalkylchloride als Cokatalysatoren eingesetzt werden. Diese Verbindungen hydrolysieren jedoch während der beschriebenen Aufarbeitungsverfahrens zu extrem feinen, gelartigen Verbindungen, die schwer filtrierbar sind. Werden Aluminiumalkylchloride eingesetzt, entstehen bei der Aufarbeitung chlorhaltige Verbindungen, wie Salzsäure oder Salze, die ebenfalls schwer abtrennbar sind. Wird Salzsäure zur Aufarbeitung eingesetzt ((EP-A0-355 682, EP-A0-485 893), entstehen ähnliche Probleme. Insbesondere bei der Verarbeitung der so hergestellten COC tritt eine Braunfärbung auf. Darüber hinaus ist ein bekanntes Problem bei der Herstellung von ethylenhaltigen Cycloolefin-Copolymeren die Bildung von teilkristallinen Ethylenpolymerisaten als Nebenprodukt. In der EP-AU-447 072 z. B. wird beschrieben, wie Cycloolefin-Copolymere, hergestellt durch Vanadium-Katalyse (vergl. EP-AO-156 464), durch eine aufwendige mehrstufige Filtration von teilkristallinen Ethylenpolymerisation befreit werden. Auch die in der EP 404 870 beschriebenen Metallocen-Katalysatoren, mit der Ausnahme von Isopropylen-(9-fluorenyl)cyclopentadienylzirkondichlorid und Diphenylcarbyl)-9-fluorenyl)cyclopentadienylzirkondichlorid, produzieren als Nebenprodukt zum Cycloolefin-Copolymer teilkristalline Ethylenpolymerisate, wie eigene, ausführliche Untersuchungen gezeigt haben. Je höher allerdings der Gehalt an teilkristallinem Ethylpolymerisat ist, desto höher jedoch ist die optische Dämpfung des Materials.

Neben einer hervorragenden Transparenz ist eine weitere wichtige Voraussetzung für den Einsatz eines Polymers zur Herstellung einer polymeren optischen Faser bzw. eines Lichtwellenleiters eine niedrige Schmelzeviskosität, um die Verarbeitungsbedingungen zu verbessern.

Die Aufgabe der Erfindung bestand darin, ein Verfahren zur Herstellung von COC zu entwickeln, die sich durch eine verbesserte Schmelzeviskosität, eine niedrigere optische Dämpfung, eine erhöhte Glastemperatur und eine geringe Wasseraufnahme gegenüber dem Stand der Technik auszeichnen.

Es wurde nun gefunden, daß durch Copolymerisation von niederen alpha-Olefinen, cyclischen Olefinen und polycyclischen Olefinen unter Verwendung eines Katalysatorsystems, bestehend aus mindestens einem Metallocen-Katalysator und mindestens einem Cokatalysator, COC mit einer niedrigen Schmelzeviskosität hergestellt werden können, wenn Metallocen-Katalysatoren bestimmter Symmetrien eingesetzt werden. Unterwirft man das nach der Copoylmerisation entstandene Reaktionsgemisch einem speziellen Aufarbeitungsverfahren, so können aus dem gereinigten COC und einem transparenten Polymeren, dessen Brechungsindex geringer ist als der Brechungsindex des

COC, Lichtwellenleiter mit einer niedrigen optischen Dämpfung von 0,1 - 5 dB/km, bevorzugt 0,2 - 2 dB/km und besonders bevorzugt 0,3 - 1,5 dB/km hergestellt werden.

Die Erfindung betrifft somit ein Verfahren zur Herstellung von COC mit einer niedrigen Schmelzeviskosität, die durch Polymerisation von 0,1 bis 99,9 Gew.-%, bezogen auf die Gesamtmenge der Monomeren, mindestens eines Monomers der Formeln I, II, III oder IV

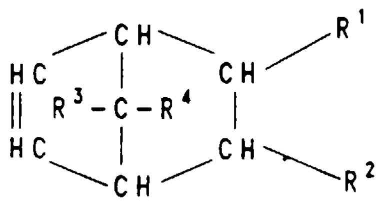

(I),

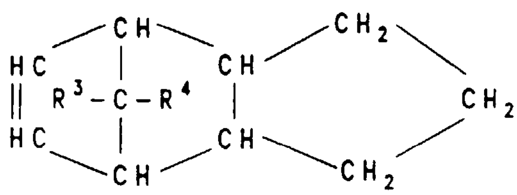

(II),

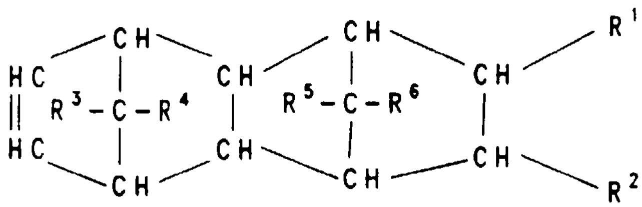

(III),

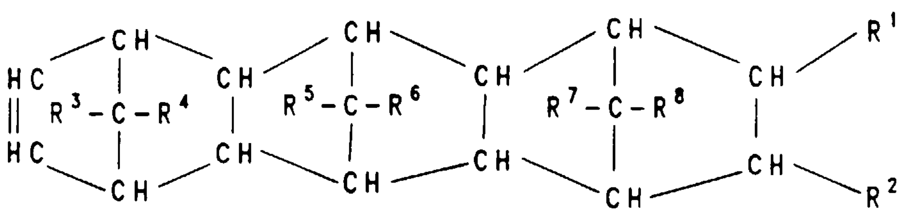

(IV),

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest oder $C_6$-$C_{16}$-Arylrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel V

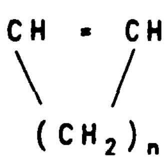

(V)

worin n eine Zahl von 2 bis 10 ist, und
0,1 bis 99,9 Gew.-%, bezogen auf die Gesamtmenge der Monomeren, mindestens eines acvclischen 1-Olefins der Formel VI

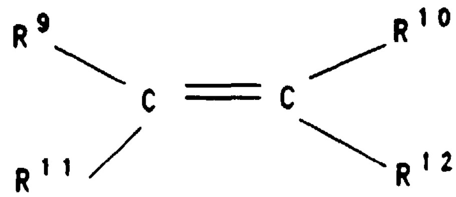 (VI),

worin $R^9$, $R^{10}$, $R^{11}$ und $R^{12}$ gleich oder verschieden sind und ein Wasserstoffatom oder einen $C_1$-$C_8$-Alkylrest oder $C_6$-$C_{16}$-Arylrest bedeuten, in Lösung, in Suspension, in dem flüssigen Cycloolefinmonomer oder Cycloolefinmonomerengemisch oder in der Gasphase, bei einer Temperatur von - 78 bis 150° C, bei einem Druck von 0,5 bis 64 bar, in Gegenwart eines Katalysators, welcher aus einem Metallocen als Übergangsmetallkomponente und einem Aluminoxan der Formel VII

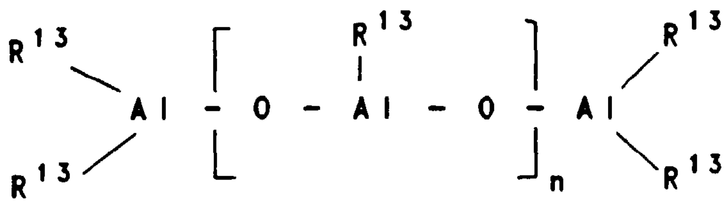 (VII)

für den linearen Typ und/oder der Formel VIII

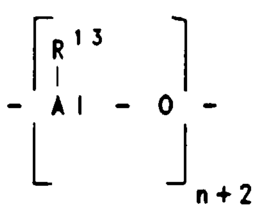 (VIII)

für den cyclischen Typ besteht, wobei in den Formeln VII und VIII $R^{13}$ eine $C_1$-$C_6$-Alkylgruppe oder Phenyl oder Benzyl bedeutet und n eine ganze Zahl von 2 bis 50 ist, wobei die Polymerisation in Gegenwart eines Katalysators durchgeführt wird, dessen Übergangsmetallkomponente mindestens eine Verbindung der Formel IX

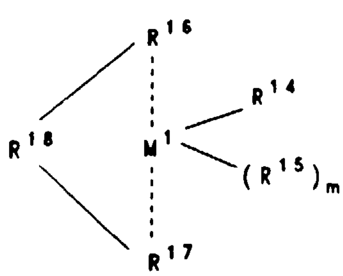 (IX)

ist, worin

$M^1$ Titan, Zirkon, Hafnium, Vanadium, Niob oder Tantal ist,

$R^{14}$ und $R^{15}$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,

m eins oder zwei, je nach der Wertigkeit des Zenralatoms $M^1$, sein kann,

$R_{18}$

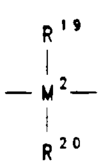 , 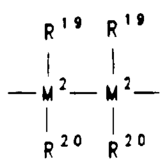 , 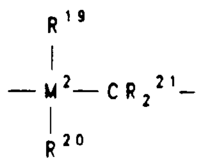 , 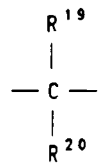 , 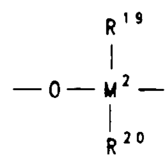 , 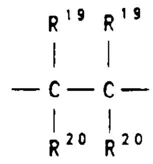 ,

= $BR^{19}$, = $AlR^{19}$, -Ge-, -Sn-, -O-, -S-, = SO, =$SO_2$, = $NR^{19}$, = CO, = $PR^{19}$ oder = $P(O)R^{19}$ ist, wobei $R^{19}$, $R^{20}$ und $R^{21}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder $R^{19}$ und $R^{20}$ o2der $R^{19}$ und $R^{21}$ jeweils mit den sie verbindenden Atomen einen Ring bilden,

$M^2$ Silizium, Germanium oder Zinn ist,

$R^{16}$ und $R^{17}$ verschieden sind und einen ein- oder mehrkernigen Kohlenwasserstoffrest, welcher mit dem Zentralatom $M^1$ eine Sandwichstruktur bilden kann, bedeuten, dadurch gekennzeichnet, daß das Metallocen der Formel IX eine $C_s$-Symmetrie in Bezug auf die Liganden $R^{16}$ und $R^{17}$ und das sie verbindende Zentralatom $M^1$ besitzt,

wobei man das Copolymerisat nach Ablauf der Copolymerisation einem Reinigungsverfahren unterwirft, wobei in einem ersten Schritt des Reinigungsverfahrens das Reaktionsgemisch mit einem Filterhilfsmittel und mit einer Substanz, die die metallorganische Verbindungen im Reaktionsgemisch ausfällt, suspendiert wird, in einem zweiten Schritt der heterogene Anteil fiitriert wird und in einem dritten Schritt das gereinigte COC aus dem COC-Filtrat mit Hilfe eines Fällmittels ausgefällt wird oder das Lösungsmittel des COC-Filtrats abgedampft wird und das erhaltene Material eine optische Dämpfung von 0,1 - 5 dB/m aufweist.

Bei der Polymerisation wird mindestens ein polycyclisches Olefin der Formel I, II, III oder IV, vorzugsweise ein Cycloolefin der Formel I oder III,

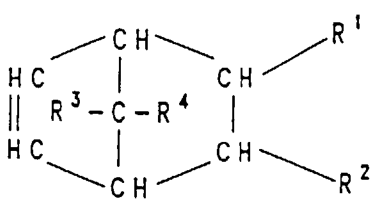 (I),

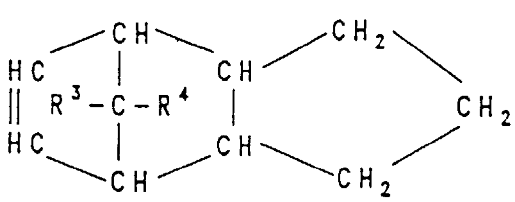 (II),

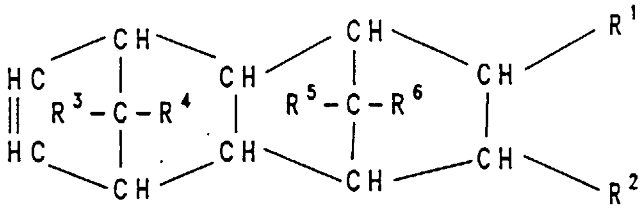

(III),

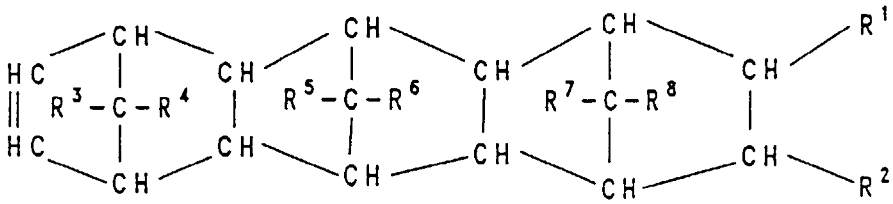

(IV),

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest oder einen $C_1$-$C_{16}$-Arylrest bedeuten, wobei gleiche Reste in den verschiedenen Formeln eine unterschiedliche Bedeutung haben können, polymerisiert.
Gegebenenfalls wird auch ein monocyclisches Olefin der Formel V

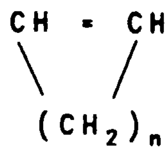

(V)

worin n eine Zahl von 2 bis 10 ist, verwendet.
Ein anderes Comonomer ist ein acyclischen 1-Olefins der Formel VI,

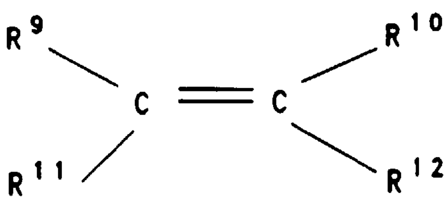

(VI),

worin $R^9$, $R^{10}$, $R^{11}$ und $R^{12}$ gleich oder verschieden sind und ein Wasserstoffatom oder einen $C_1$-$C_8$-Alkylrest, der auch eine Doppelbindung enthalten kann, oder einen $C_6$-$C_{16}$-Arylrest bedeuten. Bevorzugt sind Ethylen, Propylen, Buten, Hexen, Octen oder Styrol. Besonders bevorzugt ist Ethen. Darüber hinaus können auch Diene eingesetzt werden.

Insbesondere werden Copolymere von polycyclischen Olefinen der Formel I und II hergestellt.

Das polycyclische Olefin (I bis IV) wird in einer Menge von 0,1 bis 99,9 Gew.-%, das monocyclische Olefin (V) in einer Menge von 0,1 bis 99,9 Gew.-% und das acyclische 1-Olefin (VI) in einer Menge von 0,1 bis 99,9 Gew.-%, jeweils bezogen auf die Gesamtmenge der Monomeren, eingesetzt.

Die Monomeren werden vorzugsweise in folgenden Mengenverhältnissen einbaut:

a) das molare Monomerverhältnis polycyclisches Olefin (I bis IV) zu 1-Olefin (VI) beträgt in den entsprechenden Polymeren 1:99 bis 99:1, vorzugsweise 20:80 bis 80:20;

b) bei Polymeren aus polycyclischen Olefinen (I bis IV) und monocyclischen Olefinen (V) beträgt das Molverhältnis

polycyclisches Olefin zu monocyclischem Olefin 10:90 bis 90:10;

c) bei Polymeren aus polycyclischen Olefinen (I bis IV), monocyclischen Olefinen (V) und 1-Olefinen (VI) beträgt das molare Monomerverhältnis polycyclisches Olefin zu monocyclischem Olefin zu 1-Olefin 93:5:2 bis 5:93:2 bis 5:5:90, d.h. das Molverhältnis liegt innerhalb eines Mischungsdreieicks, dessen Ecken durch die Molverhältnisse 93:5:2, 5:93:2 und 5:5:90 festgelegt sind;

d) in den Angaben a), b) und c) sind als polycyclische Olefine, monocyclische Olefine und 1-Olefine auch gemische zweier oder mehrerer Olefine des jeweiligen Typs zu verstehen.

Der bei der Polymerisation verwendende Katalysator besteht aus einem Aluminoxan und mindestens einem Metallocen der Formel IX

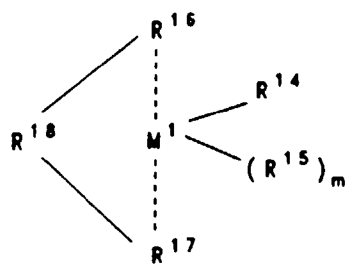

(IX)

In Formel IX ist $M^1$ ein Metall aus der Gruppe Titan, Zirkon, Hafnium, Vanadium, Niob und Tantal, vorzugsweise Zirkon und Hafnium.

$R^{14}$ und $R^{15}$ sind gleich oder verschieden und bedeuten ein

Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^{16}$ und $R^{17}$ sind verschieden und bedeuten einen ein- oder mehrkernigen Kohlenwasserstoffrest, welcher mit dem Zentralatom $M^1$ eine Sandwichstruktur bilden kann.
Das Metallocen der Formel IX hat eine $C_s$-Symmetrie in Bezug auf die Liganden $R^{16}$ und $R^{17}$ und auf das sie verbindende Zentralatom $M^1$.
Bevorzugt ist $R^{16}$ Fluorenyl und $R^{17}$ Cyclopentadienyl.
$R^{18}$ ist eine ein- oder mehrgliedrige Brücke, welche die Reste $R^{16}$ und $R^{17}$ verknüpft und bedeutet

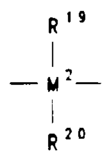 , 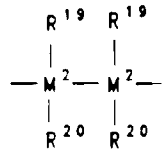 , 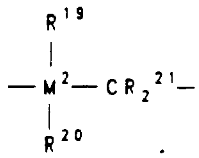 , 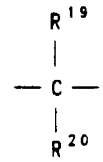 , 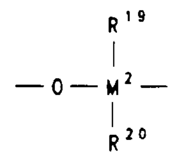 , 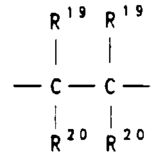 .

$= BR^{19}$, $= AlR^{19}$, -Ge-, -Sn-, -O-, -S-, = SO, $= SO_2$, $= NR^{19}$, = CO, $= PR^{19}$ oder $= P(O)R^{19}$ ist, wobei $R^{19}$, $R^{20}$ und $R^{21}$ gleich oder verschieden sind und ein Wasserstoffatom, ein Halogenatom, vorzugsweise Chlor, eine $C_1$-$C_{10}$- vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$, vorzugsweise $C_6$-$C_8$-Arylgruppe, eine

$C_1$-$C_{10}$, vorzugsweise $C_1$-$C_4$-Alkoxygruppe, insbesondere Methoxygruppe, eine $C_2$-$C_{10}$, vorzugsweise $C_2$-$C_4$-Alkenylgruppe, eine $C_7$-$C_{40}$, vorzugsweise $C_7$-$C_{10}$-Arylalkylgruppe, eine $C_8$-$C_{40}$, vorzugsweise $C_8$-$C_{12}$-Arylalkenylgruppe oder eine $C_7$-$C_{40}$, vorzugsweise $C_7$-$C_{12}$-Alkylarylgruppe bedeuten, oder $R^{19}$ und $R^{20}$ oder $R^{19}$ und $R^{21}$ bilden jeweils zusammen mit den sie verbindenden Atomen einen Ring. $M^2$ ist Silizium, Germanium oder Zinn, bevorzugt Silizium oder Germanium. $R^{18}$ ist vorzugsweise $=CR^{19}R^{20}$, $=SiR^{19}R^{20}$, $=GeR^{19}R^{20}$, -O-, -S-, =SO, $=PR^{19}$ oder $=P(O)R^{19}$.

Die Metallocene können nach folgendem Reaktionsschema hergestellt werden:

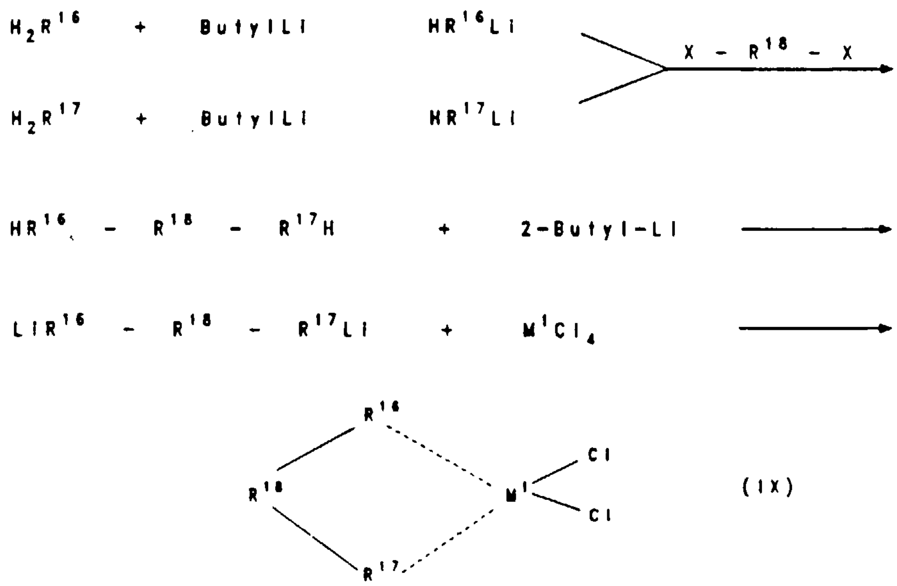


oder

$$H_2R^{16} + ButylLi \rightarrow HR^{16}Li$$

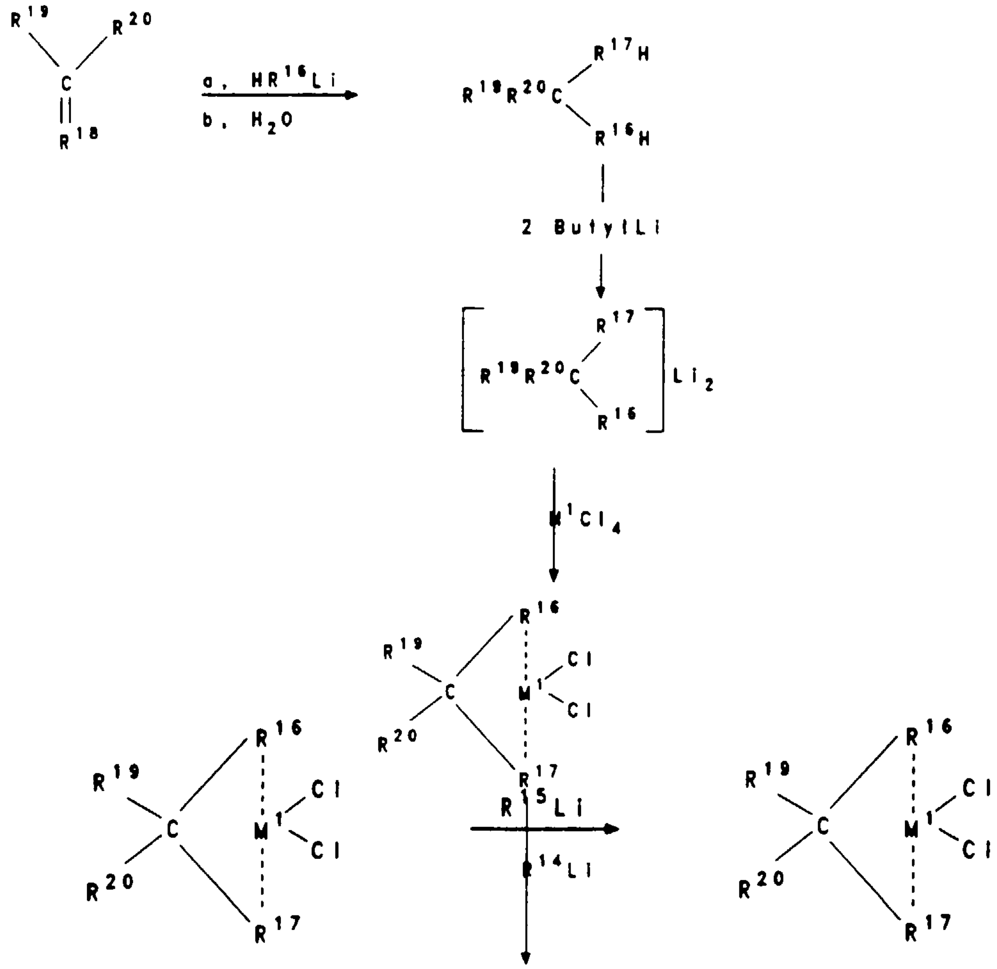


Das obige Reaktionschema gilt selbstverständlich auch für die Fälle $R^{16}$=$R^{17}$ und/oder $R^{19}$=$R^{20}$ und/oder $R^{14}$=$R^{15}$.

Bevorzugt eingesetzte Metallocene sind:

Diphenylmethylen-(9-fluorenyl)-(cyclopentadienyl)-zirkondichlorid,
Isopropylen-(9-fluorenyl)-cyclopentadienyl-zirkondichlorid,
Methylphenylcarbyl (9-fluorenyl) (cyclopentadienyl)zirkondichlorid

oder deren Gemische.

Besonders bevorzugt ist
Isopropylen-(9-fluorenyl)-cyclopentadienyl-zirkondichlorid oder deren Gemische.

Der Cokatalysator ist ein Aluminoxan der Formel VII

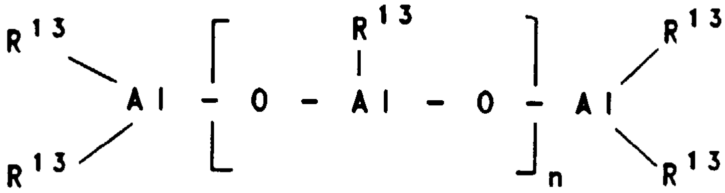

(VII)

für den linearen Typ und/oder der Formel VIII

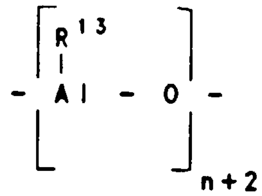

(VIII)

für den cyclischen Typ. In diesen Formeln bedeutet $R^{13}$ eine $C_1$-$C_6$-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Bei einem der Verfahren wird fein gepulvertes Kupfersulfatpentahydrat in Toluol aufgeschlämmt und in einem, Glaskolben unter Inertgas bei etwa -20°C mit soviei Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten alipatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$- 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 150°C, vorzugsweise 20 bis 100°C.

Eine deutlich längere Voraktivierung ist möglich, sie wirkt sich normalerweise jedoch weder aktivitätssteigernd noch aktivitätsmindernd aus, kann jedoch zu Lagerzwecken durch aus sinnvoll sein.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit Worden ist, benutzt werden. Brauchbar ist auch Toluol, Dekalin und Xylol.

Schließlich kann auch das zu polymerisierende Monomere als Lösemittel oder Suspensionsmittel eingesetzt

werden. Im Falle von Norbornen werden derartige Massepolymerisationen bei einer Temperatur oberhalb 45°C durchgeführt. Die Molmasse des Polymerisats kann in bekannter Weise geregelt werden; vorzugsweise wird dazu Wasserstoff verwendet.

Die Polymersiation wird in bekannter Weise in Lösung, in Suspension, in der flüssigen Cycloolefinmonomer oder Cycloolefinmonomergemisch oder in der Gasphase, kontinuierlich oder diskontinuierlich, ein- oder mehrstufig bei einer Temperatur von -78 bis 150°C, vorzugsweise 20 bis 100°C, durchgeführt. Der Druck beträgt 0,5 bis 64 bar und wird entweder durch die gasförmigen Olefine oder mit Hilfe von Inertgas erhalten.

Besonders vorteilhaft sind kontinuierliche sowie mehrstufige Verfahren, weil sie einen rationalen Einsatz des polycyclischen Verfahren das polycyclische Olefin, welches als Restmonomer zusammen mit dem Reaktionsgemisch zuführen.

Dabei wird die Metallocenverbindung in einer Konzentration, bezogen auf das Übergangsmetall, von $10^{-3}$ bis $10^{-7}$, vorzugsweise $10^{-5}$ bis $10^{-6}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 \cdot 10^{-2}$ mol pro $dm^3$ Reaktorvolumen verwendet, bezogen auf den Gehalt an Aluminium. Prinzipiell sind aber auch höhere Konzentrationen möglich, um die Polymerisationseigenschaften verschiedener Metallocene einzusetzen.

Bei der Herstellung von Copolymerisaten kann die Variation der Molverhältnisse des polycyclischen Olefins zum eingesetzten 1-Olefin in einem weiten Bereich erfolgen. Durch die Wahl der Polymerisationstemperatur, durch die Konzentration der Katalysatorkomponenten und das eingesetzte Molverhältnis läßt sich die Einbaurate an Comomomer nahezu beliebig steuern. Bei Norbornen wird eine Einbaurate von mehr als 40 mol% erreicht.

Die mittlere Molmasse des gebildeten Copolymers läßt sich durch Variation der Katalysatorkonzentration oder der Temperatur in bekannter Weise variieren.

Die Polydispersität $M_w/M_n$ der Copolymeren ist mit Werten zwischen 1,9 - 3,5 recht eng. Dadurch resultiert ein Eigenschaftsbild der Polymerisate, das diese für das Extrudieren besonders geeignet macht.

Bei der Copolymerisation der polycyclischen Olefine mit den acylischen Olefinen, insbesondere mit Propylen, entstehen Polymere mit einer Viskositätszahl größer 20 $cm^3/g$. Bei Copolymeren von Norbornen mit acyclischen Olefinen, insbesondere Ethylen, liegt die Glastemperatur oberhalb 100°C.

Um COC mit einer niedrigen optischen Dämpfung von 0,1 - 5 dB/m herzustellen, wird das Reaktionsgemisch einem Reinigungsverfahren unterzogen. Erfindungsgemäß wird nach einem Verfahren gereinigt, das dadurch gekennzeichnet ist, daß in einem ersten Schritt das Reaktionsgemisch mit einem Filterhilfsmittel und mit einer Substanz, die die metallorganischen Verbindungen im Reaktionsgemisch ausfällt, suspendiert wird, in einem zweiten Schritt der heterogene Anteil filtriert wird und in einem dritten Schritt das gereinigte COC aus dem COC-Filtrat mit Hilfe eines Fällungsmittels ausgefällt wird oder das Lösungsmittel des COC-Filtrats abgedampft wird.

In Schritt drei können Abdampfverfahren eingesetzt werden wie beispielsweise Abdampfen mit Hilfe einer Flashkammer, eines Dünnfilmverdampfers, ®List-Kneters (List, England), Entgasungsextruders oder eines ®Diskpacks (Farrel, USA). Substanzen, die die metallorganische Verbindung im Reaktionsqemisch ausfällen sind vorzugsweise polare Verbindungen, wie Wasser, Ethylenglycol, Glycerin und Essigsäure. Vorzugsweise ist das Suspendiermittel ein Kohlenwasserstoff. Als Filterhilfsmittel sind besonders geeignet Kieselgur, z.B. ®Celite 545, (LuV, Hamburg), Perlite, z.B. ®Celite Perlite J-100 (LuV), modifizierte Cellulose, z.B. ®Diacel (LuV), geeignet sind auch poröser Kohlenstoff und absortive Asbestfasern. Durch den Einsatz von Filterhilfsmitteln wird eine gute Tiefenfiltration erzielt. Es können kontinuierliche und diskontinuierliche Filtertechniken eingesetzt werden. Die Filtration kann als Druckfiltration oder Zentrifugation durchgeführt werden. Vorzugsweise wird durch Drucknutschen, Druckfiltrieren, z.B. durch Filtrieren durch ein Vlies oder durch Schälzentrifugation filtriert. Anwendbar sind auch andere herkömmliche Filtriertechniken. Die filtrierte COC-Lösung kann kontinuierlich oder diskontinuierlich mehrfach über den gleichen Filter geführt werden, damit die Filtrierwirkung weiter intensiviert wird.

Ein geeignetes Fällmittel ist Aceton, Isopropanol oder Methanol.

Zur Herstellung von Lichtwellenleitern werden die erhaltenen Polymeren, die dem oben beschriebenen Reinigungsschritt unterworfen und getrocknet worden sind, unter Verwendung eines Kolben- oder Schneckenextruders aufgeschmolzen und durch eine Düse gedrückt. Auf den entstehenden Faden wird eine Mantelschicht aus einem zweiten Polymeren aufgebracht, durch Coextrusion oder durch Beschichtung aus einer Lösung, wobei die Brechzahl des zweiten Polymeren niedriger als die des Kernmaterials ist. Als Mantelmaterial kommen in Frage Polymere und Copolymere aus 4-Methylpenten u.a. Olefinen, Copolymere von Ethylen und Vinylidenfluorid, gegebenenfalls unter Zusatz anderer Comonomeren wie z.B. Hexafluorpropen, Tetrafluorethylen, Terpolymere aus Tetrafluorethylen, Hexafluorpropen und Vinylidenfluorid, gegebenenfalls auch Ethylen, Copolymere von Methylmethacrylat und Methacrylsäureestern von (teil)fluorierten Alkoholen, z.B. Tetrafluor-n-propylmethacrylat.

Zur Herstellung von flächigen Lichtleitern werden die nach dem oben beschriebenen Verfahren gereinigten Polymeren in einem Extruder aufgeschmolzen und durch eine Breitschlitzdüse gedrückt. Die Reflexionsschicht auf der Oberfläche läßt sich durch Coextrusion oder durch Beschichtung aus Lösung mit einem zweiten Polymeren aufbringen, dessen Brechzahl niedriger als die des Kernmaterials ist.

Die Erfindung wird durch die nachfolgenden Beispiele erläutert.

Beispiele

Beispiel 1

Ein sauberer und trockener 75-$dm^3$-Polymerisationsreaktor mit Rührer wurde mit Stickstoff und dann mit Ethylen gespült und mit 22 000 g Norbornenschmelze (Nb) und 6 Liter Toluol gefüllt. Unter Rühren wurde dann der Reaktor auf eine Temperatur von 70°C gebracht und 3,4 bar Ethylen aufgedrückt.
Danach wurden 500 $cm^3$ toluolische Methylalumoxanlösung (10,1 Gew-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 3,4 bar gehalten wurde. Parallel dazu wurden 350 mg Diphenylcarbyl-cyclopentadienyl)-(9-fluorenyl)-Zirkoniumdichlorid in 500 $cm^3$ toluolischer Methylaluminoxanlösung (Konzentration und Qualität siehe oben) gelöst und durch 15 minütiges Stehenlassen voraktiviert. Dann wurde die Lösung des Komplexes (Kat. Lösung) in den Reaktor dosiert. Zur Molekulargewichtsregelung wurden 0,7 Liter Wasserstoff vorgelegt. Während der Polymerisation wurde 780 ml Wasserstoff/Stunde kontinuierlich zudosiert. Unter Rühren (750 Umdrehungen pro Minute) wurde dann 1,5 Stunden bei 70°C polymerisiert, wobei der Ethylendruck durch Nachdosieren bei 3,4 bar gehalten wurde.
Die Reaktionslösung wurde in einem 150-Liter-Rührkessel abgelassen, in dem 500g Kieselgur (®Celite 545, LuV, Hamburg) oder wahlweise auch Cellulosefilterhilfsmittel (®Diacel, LuV, Hamburg), 200 ml Wasser, 0,5 g Peroxidzersetzer (®Hostanox 3, Hoechst) und 0,5 g Antioxidans (®Hostanox 03, Hoechst) in 50 Liter einer hydrierten Dieselälfraktion (®Exsol, Siedebereich 100 - 120°C, Exxon) vorgelegt wurden. Bei 60°C wurde 30 min gerührt.
Auf dem Filtergewebe einer 120-Liter-Drucknutsche wurde ein Filterkuchen aus 500g ®Celite (oder auch 500 g Cellulose), suspendiert in 10 Liter ®Exsol, aufgebaut. Die Polymerlösung wurde über die Drucknutsche filtriert. Dabei wurde so verfahren, daß das Filtrat zunächst 15 min in die Nutsche zurückgefördert wird. Über der Lösung wurde ein Druck bis zu 2,8 bar Stickstoff aufgebaut. Anschließend wurde über 7 Filterkerzen (Fluid Dynamics, Dynalloy XS64, 5µm, 0,1 $m^2$/Kerze), die in einem Stahlgehäuse montiert wurden, filtriert.
Die Polymerlösung wurde mittels eines Dispergators (®Ultraturax) in 500 Liter Aceton eingerührt und gefällt. Die Acetonsuspension wurde dabei über eine 680-Liter-Rührdrucknutsche bei geöffnetem Bodenventil im Kreis gefördert. Nach Schließen des Bodenventils wurde dreimal mit 200 l Aceton gewaschen. Der letzten Wäsche wurden 50 g Stabilisator (®Irganox 1010, Ciba) zugesetzt.
Im Anschluß an die letzte Filtration wurde das Produkt bei 100°C im Stickstoffstrom vorgetrocknet und im Trockenschrank bei 0,2 bar 24 Stunden nachgetrocknet. Es wurde eine Produktmenge von 4160 g erhalten. An dem Produkt wurde eine Viskositätszahl (VZ) von 62 $cm^3$ (DIN 53728) und eine Glastemperatur ($T_g$) von 181°C gemessen. Seine Schmelzeviskosität beträgt 400 PaS.

Beispiel 2 (Vergleichsbeispiel zu Beispiel 1, EP 407 870)

Ein sauberer und trockener 75-$dm^3$-Polymerisationsreaktor mit Rührer wurde mit Stickstoff und dann mit Ethylen gespült und mit 22 000 g Norbornenschmelze (Nb) und 6 Liter Toluol gefüllt. Unter Rühren wurde dann der Reaktor auf eine Temperatur von 70°C gebracht und 3,4 bar Ethylen aufgedrückt.
Danach wurden 500 $cm^3$ toluolische Methylalumoxanlösung (10,1 Gew-% Methylaluminoxan mit Molmasse 1 300 g/mol nach kryoskopischer Bestimmung) in den Reaktor dosiert und die Mischung 15 min bei 70°C gerührt, wobei durch Nachdosieren der Ethylendruck bei 3,4 bar gehalten wurde. Parallel dazu wurden 350 mg Diphenylcarbyl-(cyclopentadienyl)-(9-fluorenyl)-zirkoniumdichlorid in 500 $cm^3$ toluolischer Methylaluminoxanlösung (Konzentration und Qualität siehe oben) gelöst und durch 15 minütiges Stehenlassen voraktiviert. Dann wurde die Lösung des Komplexes (Kat. Lösung) in den Reaktor dosiert. Zur Molekulargewichtsregelung wurden 0,7 Liter Wasserstoff vorgelegt. Während der Polymerisation wurden 780 ml Wasserstoff/Stunde kontinuierlich zudosiert. Unter Rühren (750 Umdrehungen pro Minute) wurde dann 1,5 Stunden bei 70°C polymerisiert, wobei der Ethylendruck durch Nachdosieren bei 3,4 bar gehalten wurde.
Dann wurde der Reaktorinhalt schnell in einen 150 l Rührkessel abgelassen, in dem 200 $cm^3$ Isopropanol in 10 l Exsol vorgelegt waren. Diese Mischung wurde in 500 l Aceton ausgefällt, 10 min gerührt und dann der suspendierte polymere Feststoff abfiltriert. Das abfiltrierte Polymer wurde dann in 200 l einer Mischung aus zwei Teilen 3-normaler Salzsäure und einem Teil Ethanol gegeben und diese Suspension 2 Stunden gerührt. Das Polymer wurde dann erneut abfiltriert, mit Wasser neutral gewaschen und bei 80°C und 0,2 bar 15 h getrocknet. Es wurde eine Produktmenge von 4320 g erhalten. An dem Produkt wurde eine Viskositätszahl VZ = 60 $cm^3$ (DIN 53728) und eine Glastemperatur ($T_g$) von 182°C gemessen. Es wurde keine Schmelzendotherme in der DSC gefunden.

Beispiel 3 (Vergleichsbeispiel zu Beispiel 1, EP 407 870)

Es wurde analog zu Beispiel 1 verfahren. Als Katalysator wurde jedoch 1200 mg rac-Dimethylsilyl-bis-(1-indenyl)-zirkoniumdichlorid verwendet. Nach einer Reaktionszeit von 150 min und einem Ethylendruck von 3,2 bar und der Anwendung des in Beispiel 1 beschriebenen Aufarbeitungsverfahrens wurden 5070 g Polymer erhalten, an dem eine VZ von 61 $cm^3$ (DIN 53728) und eine $T_g$ von 179°C gemessen wurden.

Tabelle 1

| | COC (Beispiel 1) | COC (Beispiel 3) |
|---|---|---|
| Schmelzviskosität (Pa*S) | 400 | 2000 |

(gemessen als Nullscherviskosität, d.h. als angenäherte Viskosität bei einer Scherrate von 0,1 $s^{-1}$, Messung durch Kapillarviskosimetrie. Messung bei $T = T_g + 120°C$)

Beispiel 4

Das Polymer aus Beispiel 1 wird in einem Kolbenextruder bei einer Gehäusetemperatur von 210 bis 260° C aufgeschmolzen und mit einem Volumenstrom von 610 $cm^3$/h durch eine Düse mit einem Innendurchmesser von 2 mm gedrückt. Ein Terpolymer aus Tetrafluorethylen, Vinylidenfluorid und Hexafluorpropen mit einem Schmelzflußindex von 32 g/10 min bei 265° C und einer Last von 11 kg wird in einem Kolbenextruder aufgeschmolzen und mit einem Volumenstrom von 39 $cm^3$ ml/h zu einem konzentrisch um die Kerndüse angeordneten Ringspalt gefördert. Der entstehende Kern-Mantel-Faden wird in einem Spinnbad abgekühlt und mit einer Geschwindigkeit von 35 m/min aufgenommen. Zur Verbesserung der mechanischen Eigenschaften wird der Faden anschließend in einem Heißluftofen bei 190° C im Verhältnis von 1:2,5 verstreckt und danach aufgespult. Es wird ein Kern-Mantel-Faden mit einem Kerndurchmesser von 970 µm und einem Manteldurchmesser von 1 mm erhalten.

Reißfestigkeit: 4,5 cN/tex (DIN________________ )
Reißdehnung : 27 % (DIN________________ )
Optische Dämpfung: 1,2 dB/m (bei 650 nm)

Beispiel 5

Das Polymer aus Beispiel 2 wird in einem Kolbenextruder bei einer Gehäusetemperatur von 210 bis 260°C aufgeschmolzen und mit einem Volumenstrom von 610 $cm^3$/h durch eine Düse mit einem Innendurchmesser von 2 mm gedrückt. Ein Terpolymer aus Tetrafluorethylen, Vinylidenfluorid und Hexafluorpropen mit einem Schmelzflußindex von 32 g/10 min bei 265° C und einer Last von 11 kg wird in einem Kolbenextruder aufgeschmolzen und mit einem Volumenstrom von 39 $cm^3$/h zu einem konzentrisch um die Kerndüse angeordneten Ringspalt gefördert. Der entstehende Kern-Mantel-Faden wird in einem Spinnbad abgekühlt und mit einer Geschwindigkeit von 5,5 m/min aufgenommen. Zur Verbesserung der mechanischen Eigenschaften wird der Faden anschließend in einem Heißluftofen bei 190°C im Verhältnis von 1:2,5 verstreckt und danach aufgespult. Es wird ein Kern-Mantel-Faden mit einem Kerndurchmesser von 970 µm und einem Manteldurchmesser von 1 mm erhalten.

Reißfestigkeit: 5,2 cN/tex (DIN________________ )
Reißdehnung : 28 % (DIN________________ )
Optische Dämpfung: 12,2 dB/m (bei 650 nm)

Beispiel 6

Analog Beispiel 3 wurde eine Polymerisationslösung hergestellt. Die Lösung wurde jedoch analog Beispiel 2 aufgearbeitet, d. h. es erfolgte keine Filtration der Polymerlösung.

In der DSC konnte neben der Glastemperatur (Tg = 178°C) eine Schmelzendotherme bei 127°C mit einer Schmelzenthalphie von 1 J/g nachgewiesen werden, die auf ein teilkristallines ethylenreiches Polymerisat zurück zuführen ist. Dieser Wert entspricht einem Polyethylengehalt im getrockneten und gereinigten Produkt von 0,5 bis 1 Gew.-%. Eine Preßplatte von 1 mm Dicke war milchig trüb (Preßbedingungen: 240°C, 10 Minuten, 50 bar Druck).

**Patentansprüche**

1. Verfahren zur Herstellung von Cycloolefincopolymeren (COC) mit einer niedrigen Schmelzeviskosität durch Copolymerisation von 0,1 bis 99,9 Gew.-%, bezogen auf die Gesamtmenge der Monomeren, mindestens eines Monomers der Formeln I, II, III oder IV

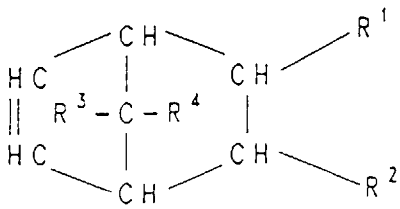

(I),

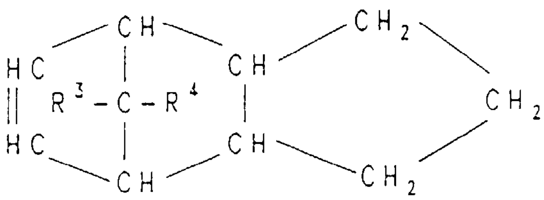

(II),

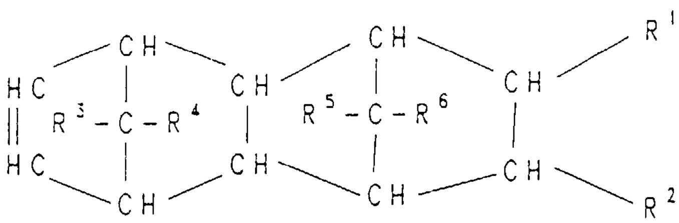

(III),

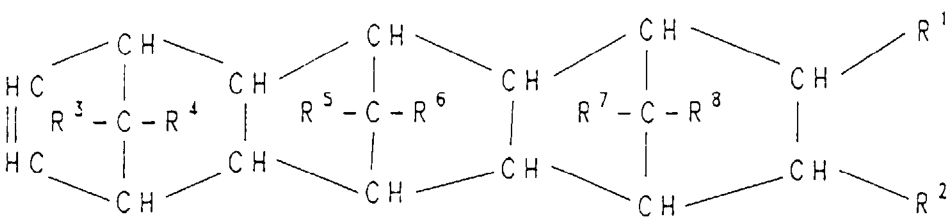

(IV),

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest cder Arylrest bedeuten, wobei gleiche Reste in den verschiedenen Forme!n eine unterschiedliche Bedeutung haben können 0 bis 99,9 Gew.-%, bezogen auf die Gesamtmenge der Monomeren, eines Cyclcolefins der Formel V

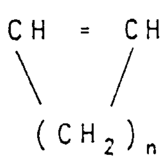

(V)

worin n eine Zahl von 2 bis 10 ist, und

0,1 bis 99,9 Gew.-%, bezogen auf die Gesamtmenge der Monomeren, mindestens eines acyclischen 1-Olefins der Formel VI

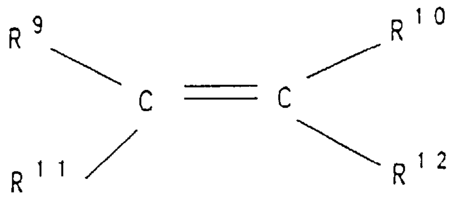

(VI),

worin $R^9$, $R^{10}$, $R^{11}$ und $R^{12}$ gleich oder verschieden sind und ein Wasserstoffatom oder einen $C_1$-$C_8$-Alkylrest bedeuten, in Lösung, in Suspension, in dem flüssigen Cycloolefinmonomer oder Cycloolefinmonomergemisch oder in der Gasphase, bei einer Temperatur von -78 bis 150° C, bei einem Druck von 0,5 bis 64 bar, in Gegenwart eines Katalysators, welcher aus einem Metallocen als Übergangsmetallkomponente und einem Aluminoxan der Formel VII

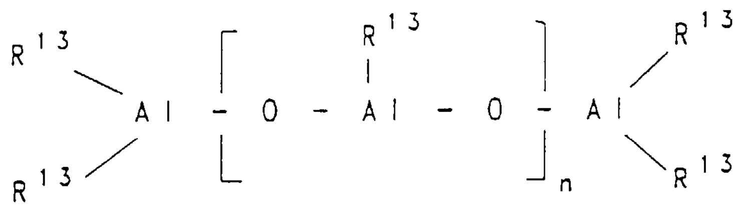

(VII)

für den linearen Typ und/oder der Formel VIII

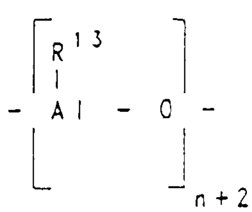

(VIII)

für den cyclischen Typ besteht, wobei in den Formeln VII und VIII $R^{13}$ eine $C_1$-$C_6$-Alkylgruppe oder Phenyl oder Benzyl bedeutet und n eine ganze Zahl von 2 bis 50 ist, wobei die Polymerisation in Gegenwart eines Katalysators durchgeführt wird, dessen Übergangsmetallkomponente mindestens eine Verbindung der Formel IX

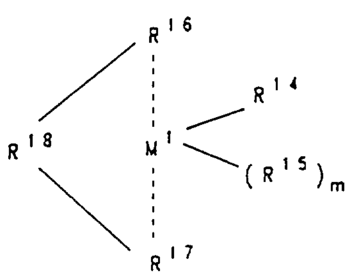

(IX)

ist, worin

| | |
|---|---|
| $M^1$ | Titan, Zirkon, Hafnium, Vanadium, Niob oder Tantal ist, |
| $R^{14}$ und $R^{15}$ | gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten, und |
| m | eins oder zwei, je nach der Wertigkeit des Zentralatoms $M^1$, sein kann, |
| $R_{18}$ | |

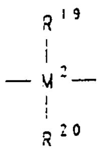 , 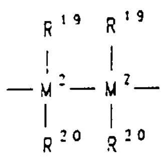 , 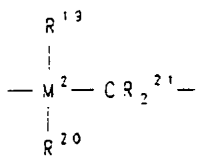 , 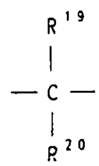 , 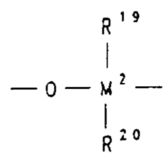 , 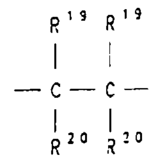 .

= $BR^{19}$, = $AlR^{19}$, -Ge-, -Sn-, -O-, -S-, = SO, =$SO_2$, = $NR^{19}$, = CO, = $PR^{19}$ oder = $P(O)R^{19}$ ist, wobei $R^{19}$, $R^{20}$ und $R^{21}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylälkylgruppe, eine $C_8$-$C_{40}$-Arylalkenylgruppe oder eine $C_7$-$C_{40}$-Alkylarylgruppe bedeuten oder $R^{19}$ und $R^{20}$ oder $R^{19}$ und $R^{21}$ jeweils mit den sie verbindenden Atomen einen Ring bilden,

| | |
|---|---|
| $M^2$ | Silizium, Germanium oder Zinn ist, |
| $R^{16}$ und $R^{17}$ | verschieden sind und einen ein- oder mehrkernigen Kohlenwasserstoffrest, welcher mit dem Zentralatom $M^1$ eine Sandwichstruktur bilden kann, bedeuten, dadurch gekennzeichnet, daß das Metallocen der Formel IX $C_s$-Symmetrie in Bezug auf die Liganden $R^{16}$ und $R^{17}$ und auf das sie verbindende Zentralatom $M^1$ besitzt, wobei man das Copolymerisat nach Ablauf der Copolymerisation einem Reinigungsverfahren unterwirft, wobei in einem ersten Schritt des Reinigungsverfahrens das Reaktionsgemisch mit einem Filterhilfsmittel und mit einer Substanz, die die metallorganische Verbindungen im Reaktionsgemisch ausfällt, suspendiert wird, in einem zweiten Schritt der heterogene Anteil filtriert wird und in einem dritten Schritt das gereinigte COC aus dem COC-Filtrat mit Hilfe eines Fällmittels ausgefällt wird oder das Lösungsmittel des COC-Filtrats abgedampft wird und das erhaltene Material eine optische Dämpfung von 0,1 - 5 dB/m aufweist. |

**2.** Verfahren nach Anspruch 1, dadurch gekennzeichnet, daß als Katalysator ein Metallocen der Formel XI verwendet wird, worin $R^{16}$ = Fluorenyl und $R^{17}$ = Cyclopentadienyl sind.

**3.** Verfahren nach Anspruch 1 oder 2, dadurch gekennzeichnet, daß als Metallocen Diphenylmethylen-(9-fluorenyl)-cyclopentadienyl-zirkoniumdichlorid und bevorzugt Isopropylen-(9-fluorenyl)-cyclopentadienyl-zirkoniumdichlorid verwendet wird.

**4.** Verfahren nach einem oder mehreren der Ansprüche 1 bis 3, dadurch gekennzeichnet, daß als 1-Olefin Ethylen eingesetzt wird.

**5.** Verfahren nach einem oder mehreren der Ansprüche 1 bis 4, daß als 1-Olefin Ethylen und als polycyclisches Olefin Norbornen eingesetzt werden.

## Claims

**1.** A process for the preparation of a cycloolefin copolymer (COC) having low melt viscosity by copolymerization of from 0.1 to 99.9% by weight, based on the total amount of the monomers, of at least one monomer of the formula I, II, III or IV

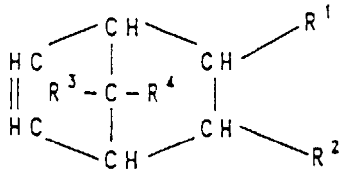

(I),

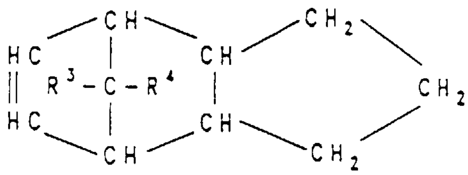

(II),

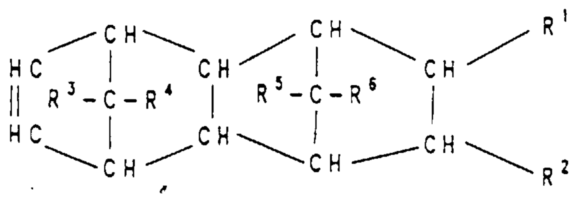

(III),

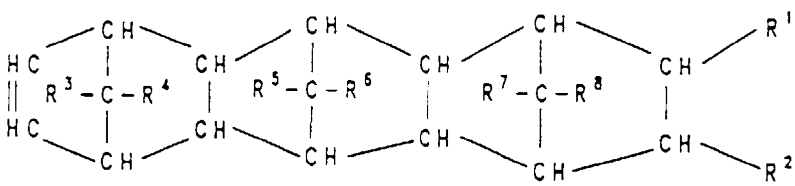

(IV),

in which $R^1$, $R^2$, $R^3$, $R^4$, $R^5$, $R^6$, $R^7$ and $R^8$ are identical or different and are a hydrogen atom or a $C_1$-$C_6$-alkyl radical or aryl radical, where identical radicals in the various formulae can have different meanings, from 0 to 99.9% by weight, based on the total amount of the monomers, of a cycloolefin of the formula V

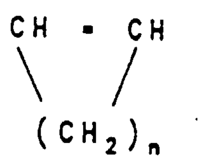

(V)

in which n is a number from 2 to 10, and from 0.1 to 99.9% by weight, based on the total amount of the monomers, of at least one acyclic 1-olefin of the formula VI

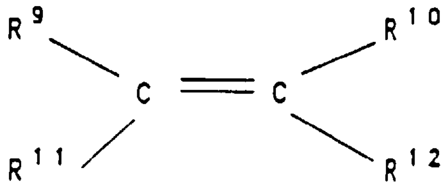

(VI),

in which $R^9$, $R^{10}$, $R^{11}$ and $R^{12}$ are identical or different and are a hydrogen atom or a $C_1$-$C_8$-alkyl radical, in solution, in suspension, in the liquid cycloolefin monomer or cycloolefin monomer mixture or in the gas phase, at a temperature of from -78 to 150°C, at a pressure of from 0.5 to 64 bar, in the presence of a catalyst comprising a metallocene as transition-metal component and an aluminoxane of the formula VII

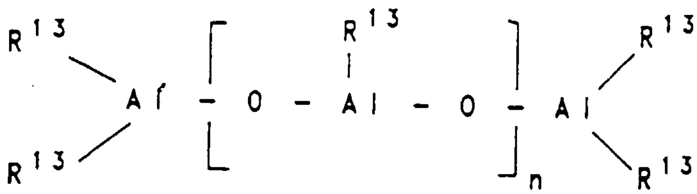

(VII)

for the linear type and/or of the formula VIII

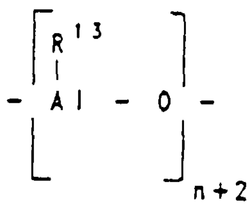

(VIII)

for the cyclic type, where, in the formulae VII and VIII, $R^{13}$ is a $C_1$-$C_6$-alkyl group or phenyl or benzyl, and n is an integer from 2 to 50, where the polymerization is carried out in the presence of a catalyst whose transition-metal component is at least one compound of the formula IX

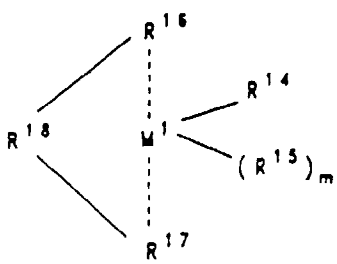

(IX)

in which

| | |
|---|---|
| $M^1$ | is titanium, zirconium, hafnium, vanadium, niobium or tantalum, |
| $R^{14}$ and $R^{15}$ | are identical or different and are a hydrogen atom, a halogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group or a $C_8$-$C_{40}$-arylalkenyl group, and |
| m | may be one or two, depending on the valency of the central atom $M^1$, |
| $R_{18}$ | is |

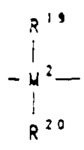 , 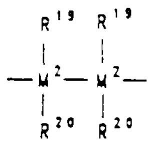 , 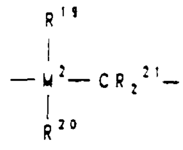 , 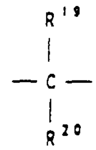 , 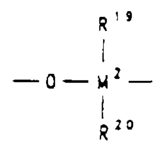 , 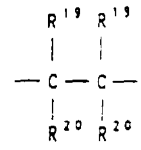 ,

=$BR^{19}$, =$AlR^{19}$, -Ge-, -Sn-, -O-, -S-, =SO, =$SO_2$, =$NR^{19}$, =CO, =$PR^{19}$ or =$P(O)R^{19}$, where $R^{19}$, $R^{20}$ and $R^{21}$ are identical or different and are a hydrogen atom, a halogen atom, a $C_1$-$C_{10}$-alkyl group, a $C_1$-$C_{10}$-fluoroalkyl group, a $C_6$-$C_{10}$-fluoroaryl group, a $C_6$-$C_{10}$-aryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{19}$ and $R^{20}$ or $R^{19}$ and $R^{21}$, in each case with the atoms connecting them, form a ring,

$M^2$ is silicon, germanium or tin,

$R^{16}$ and $R^{17}$ are different and are a monocyclic or polycyclic hydrocarbon radical which can form a sandwich structure with the central atom $M^1$, wherein the metallocene of the formula IX has $C_s$-symmetry with respect to the ligands $R^{16}$ and $R^{17}$ and with respect to the central atom $M^1$ connecting them, the copolymer being subjected, when the copolymerization is complete, to a purification process, in a first step of the purification process the reaction mixture being suspended with a filtration aid and with a substance which precipitates the organometallic compounds in the reaction mixture, the heterogeneous components being filtered off in a second step, and, in a third step, the purified COC being precipitated from the COC filtrate with the aid of a precipitant or the solvent of the COC filtrate being evaporated off and the material obtained having an optical attenuation of from 0.1 to 5 dB/m.

2. The process as claimed in claim 1, wherein the catalyst used is a metallocene of the formula XI in which $R^{16}$ is fluorenyl and $R^{17}$ is cyclopentadienyl.

3. The process as claimed in claim 1 or 2, wherein the metallocene used is diphenylmethylene(9-fluorenyl)-cyclopentadienylzirconium dichloride and preferably isopropylene(9-fluorenyl)cyclopentadienylzirconium dichloride.

4. The process as claimed in one or more of claims 1 to 3, wherein the 1-olefin employed is ethylene.

5. The process as claimed in one or more of claims 1 to 4, wherein the 1-olefin employed is ethylene and the polycyclic olefin employed is norbornene.

**Revendications**

1. Procédé pour la fabrication de copolymères de cyclo-oléfine (COC) ayant une faible viscosité à l'état fondu par copolymérisation de 0,1 à 99,9% en poids, par rapport à la quantité totale des monomères, d'au moins un monomère des formules I, II, III ou IV :

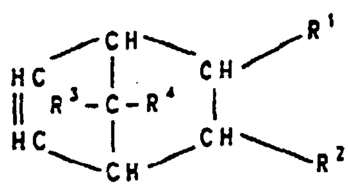 (I).

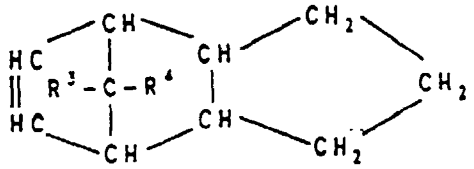

(II),

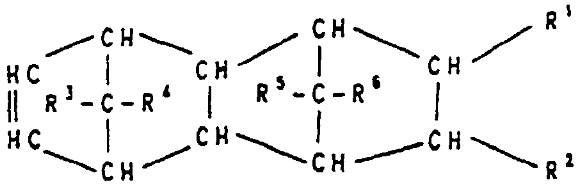

(III),

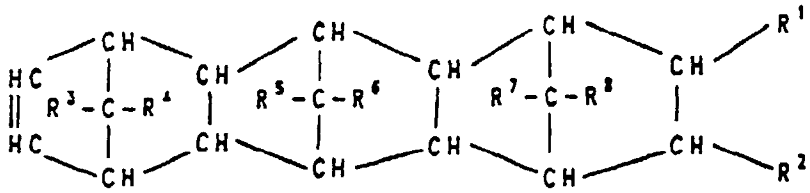

(IV),

dans lesquelles $R^1$, $R^2$, $R^3$, $R^4$, $R^5$, $R^6$, $R^7$ et $R^8$ sont identiques ou différents et désignent un atome d'hydrogène ou un radical alkyle en $C_1$-$C_8$ ou un radical aryle, des radicaux identiques dans les diverses formules pouvant avoir une signification différente, de 0 à 99,9% en poids, par rapport à la quantité totale des monomères, d'une cyclo-oléfine de formule V :

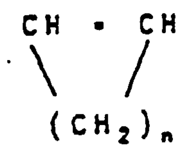

(V)

dans laquelle n est un nombre de 2 à 10, et
de 0,1 à 99,9% en poids, par rapport à la quantité totale des monomères, d'au moins une 1-oléfine acyclique de formule VI :

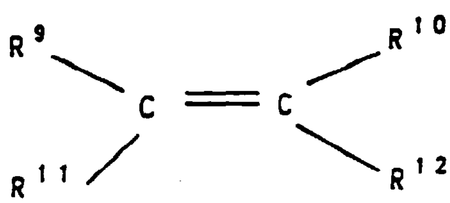

(VI),

dans laquelle $R^9$, $R^{10}$, $R^{11}$ et $R^{12}$ sont identiques ou différents et désignent un atome d'hydrogène ou un radical alkyle en $C_1$-$C_8$, en solution, en suspension, dans le monomère de cyclo-oléfine ou le mélange de monomères de cyclo-oléfine liquide ou dans la phase gazeuse, à une température de -78 à 150°C, à une pression de 0,5 à 64 bars, en présence d'un catalyseur qui est constitué d'un métallocène comme composant à métal de transition et d'un aluminoxane de formule VII :

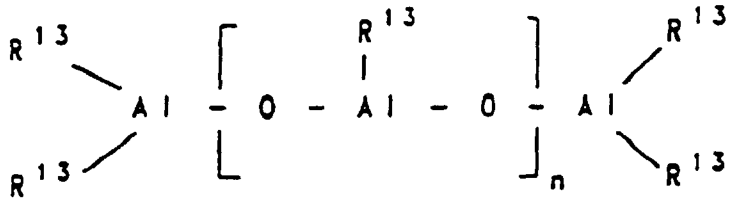

(VII)

pour le type linéaire, et/ou de formule VIII :

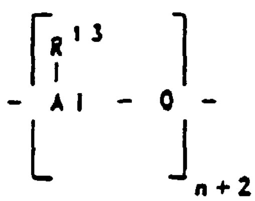

(VIII)

pour le type cyclique, $R^{13}$ dans les formules VII et VIII désignant un groupement alkyle en $C_1$-$C_6$ ou phényle ou benzyle et n étant un nombre entier de 2 à 50, la polymérisation se faisant en présence d'un catalyseur dont le composant à métal de transition est au moins un composé de formule IX :

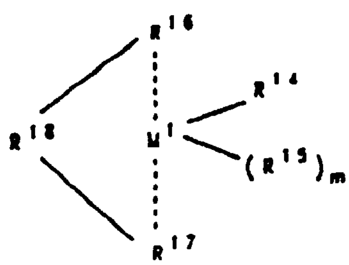

(IX)

dans laquelle :

$M^1$ est du titane, du zirconium, de l'hafnium, du vanadium, du niobium ou du tantale,
$R^{14}$ et $R^{15}$ sont identiques ou différents et désignent un atome d'hydrogène, un atome d'halogène, un groupement alkyle en $C_1$-$C_{10}$, un groupement alkoxy en $C_1$-$C_{10}$, un groupement aryle en $C_6$-$C_{10}$, un groupement aryloxy en $C_6$-$C_{10}$, un groupement alcényle en $C_2$-$C_{10}$, un groupement arylalkyle en $C_7$-$C_{40}$, un groupement alkylaryle en $C_7$-$C_{40}$ ou un groupement arylacényle en $C_8$-$C_{40}$, et
m peut être égal à un ou à deux, en fonction de la valence de l'atome central $M^1$,
$R^{18}$ est :

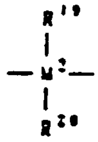 , 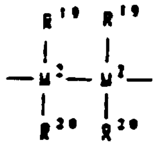 , 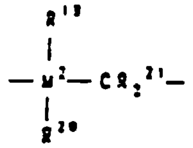 , 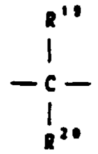 , 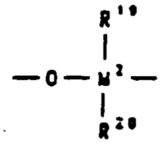 , 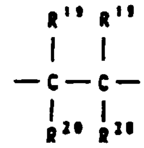 .

$=BR^{19}$, $=AlR^{19}$, -Ge-, -Sn-, -O-, =SO, $=SO_2$, $=NR^{19}$, =CO, $=PR^{19}$ ou $=P(O)R^{19}$, dans lesquels $R^{19}$, $R^{20}$ et $R^{21}$ sont identiques ou différents et désignent un atome d'hydrogène, un atome d'halogène, un groupement alkyle en $C_1$-$C_{10}$, un groupement fluoroalkyle en $C_1$-$C_{10}$, un groupement fluoroaryle en $C_6$-$C_{10}$, un groupement aryle en $C_6$-$C_{10}$, un groupement alkoxy en $C_1$-$C_{10}$, un groupement alcényle en $C_2$-$C_{10}$, un groupement arylalkyle

en $C_7$-$C_{40}$, un groupement arylacényle en $C_8$-$C_{40}$ ou un groupement alkylaryle en $C_7$-$C_{40}$ ou $R^{19}$ et $R^{20}$ ou $R^{19}$ et $R^{21}$ forment dans chaque cas un noyau avec les atomes qui les relient,
$M^2$ est du silicium, du germanium ou de l'étain, et
$R^{16}$ et $R^{17}$ sont différents et désignent un radical hydrocarbure à un ou plusieurs noyaux, qui peut former une structure en sandwich avec l'atome central $M^1$, caractérisé en ce que le métallocène de formule IX présente une symétrie en $C_s$ par rapport aux ligands $R^{16}$ et $R^{17}$ et à l'atome central $M^1$ qui les relie, où on soumet le copolymère, à la fin de la copolymérisation, à un procédé de purification dans lequel, dans la première étape du procédé de purification, le mélange réactionnel est mis en suspension avec un adjuvant de filtrage et une substance qui précipite les composés organométalliques dans le mélange réactionnel, dans une deuxième étape, on filtre la fraction hétérogène et, dans une troisième étape, on précipite le COC purifié du filtrat de COC au moyen d'un agent de précipitation ou on évapore le solvant du filtrat de COC et le matériau obtenu présente une atténuation optique de 0,1 - 5 dB/m.

**2.** Procédé selon la revendication 1, caractérisé en ce qu'on utilise comme catalyseur un métallocène de formule XI, dans laquelle $R^{16}$ = fluorényle et $R^{17}$ = cyclopentadiényle.

**3.** Procédé selon la revendication 1 ou 2, caractérisé en ce qu'on utilise comme métallocène du dichlorure de diphénylméthylène-(9-fluorényl)-cyclopentadiényl-zirconium, et de préférence du dichlorure d'isopropylène-(9-fluorényl) cyclopentadiényl-zirconium.

**4.** Procédé selon l'une ou plusieurs des revendications 1 à 3, caractérisé en ce qu'on utilise de l'éthylène comme 1-oléfine.

**5.** Procédé selon l'une ou plusieurs des revendications 1 à 4, caractérisé en ce qu'on utilise comme 1-oléfine de l'éthylène et comme oléfine polycyclique du norbornène.